# EUROPEAN PATENT SPECIFICATION

(11) **EP 1 478 565 B1**
(45) Date of publication and mention of the grant of the patent: **31.05.2006**
(21) Application number: 03743099.8
(22) Date of filing: 21.01.2003
(51) Int. Cl.: B62D 65/00

(54) **AUTOMOTIVE ROOF MODULE AND METHOD OF ASSEMBLY OF THE MODULE TO AN AUTOMOTIVE VEHICLE**
KRAFTFAHRZEUGDACHMODUL UND VERFAHREN ZUR MONTAGE DES MODULS AN EINEM KRAFTFAHRZEUG
MODULE TOIT POUR AUTOMOBILE ET PROCEDE POUR MONTER CE MODULE SUR UN VEHICULE AUTOMOBILE

(30) Priority: 22.02.2002 US 81506
(43) Date of publication of application: 24.11.2004
(73) Proprietor: DOW GLOBAL TECHNOLOGIES INC., Midland, Michigan 48674 (US)
(72) Inventor: MCLEOD, David, G., Rochester, MI 48306 (US); MCCOLLUM, Douglas, P., F-67610 La Wantzenau (FR)
(74) Representative: Burford, Anthony Frederick
(86) International application number: PCT/US2003/001708
(87) International publication number: WO 2003/072424

(56) References cited:
- EP-A- 0 250 678
- EP-A- 0 960 804
- GB-A- 2 366 544
- US-A- 5 385 755
- PATENT ABSTRACTS OF JAPAN vol. 017, no. 237 (M-1408), 13 May 1993 (1993-05-13) -& JP 04 362480 A (MAZDA MOTOR CORP), 15 December 1992 (1992-12-15)

## Description

### Technical Field

The present invention relates to a roof module suitable for assembly to an automotive vehicle. More particularly, the invention relates to a roof module that includes one or more transparent panels (e.g., a windshield, a backlite, side glass or the like) prior to assembly of the module to an automotive vehicle. The invention also relates a method of assembly of the roof module to the automotive vehicle.

### Background of the Invention

Automotive vehicle assembly techniques have historically involved the assembly of a large number of individual different components along an assembly line to form an automotive vehicle. More recently, however, automotive assembly techniques have become more modular in that components of a vehicle are being assembled into modules at one site and then the modules are assembled together for forming the vehicle at another site. By way of example, the roof of an automotive vehicle is desirably provided to a vehicle assembly line as a pre-assembled module, including vehicle components typically packaged in the roof, such as sun or moon roofs, overhead consoles, headlines and other components. The pre-assembled roof module often is assembled at a site of an automotive parts supplier and then shipped to an original equipment manufacturer for assembly into a vehicle.

It has been the general practice to provide roof modules that incorporate the roof panel as the only vehicle body structure. The incorporation of pillars, glass or other transparent panels and the roof rail into the roof module has been avoided, given that the resulting structure would be cumbersome to handle and would restrict the amount of space available for allowing assembly of seats and other components into the interior of the vehicle prior to assembly of the roof module to the body structure. Thus, there is a need for a roof module suitable for assembly to a body of an automotive vehicle wherein the module may be assembled to the vehicle relatively easily without unduly complicating assembly of other portions of the vehicle.

JP-A-04-362480 discloses assembling to an automotive vehicle body portion a roof module in which its rigidity has been increased by adhering to the roof portion a backlite except for the lower edge thereof. The module is assembled to the body portion using an adhesive to fix the lower edge of the backlite to the body portion.

DE-A-10144142 (filed 7^{rd} September 2001 & published 4^{th} April 2002) and GB-A-2366544 (filed 3^{rd} September 2001 & published 13^{th} March 2002) disclose assembling to an automotive vehicle body portion a roof module having a roof frame, at least one roof panel supported on the roof frame, glass components comprising at least a windshield supported on the roof frame, and interior roof assembly trim components supported on the roof frame. In a preferred embodiment the roof frame includes spaced apart front pillars and spaced apart rear pillars that, on assembly, are secured to upwardly extending portions of the body part, the windshield extending between, and being supported by, the front pillars.

### Summary of the Invention

The present invention meets the above needs and others by providing a roof module for assembling to an automotive vehicle body having B- and C-pillars said roof module comprising:
a) a roof portion having at least one edge and a pair of opposing and spaced apart A-pillars extending from adjacent opposing corners thereof, and
b) a transparent panel that is a windshield having a bottom edge adapted for attachment to said automotive vehicle body portion during assembly of the automotive vehicle, a top edge that is adhesively secured to the roof portion adjacent the at least one edge of the roof portion and side edges secured to said A-pillars.

The present invention also provides an improved automotive vehicle assembly process, pursuant to which a roof module such as the above is prepared at a first site and transported to a second site for assembly to the automotive vehicle.

The assembling process comprises attaching a roof module to an automotive vehicle body portion, wherein the roof module includes:
a) a roof portion having at least one edge and a pair of opposing and spaced apart A-pillars extending from adjacent opposing corners thereof, and
b) a transparent panel that is a windshield having a bottom edge adapted for attachment to said automotive vehicle body portion during assembly of the automotive vehicle, a top edge that is adhesively secured to the roof portion adjacent the at least one edge of the roof portion, and side edges secured to said A-pillars.

It is preferred that the roof portion has mating structures for engaging mating structures on pillars of the automotive vehicle body and that, during assembly of the roof module to said automotive vehicle body portion, said mating structures on the roof portion engage said mating structures on said pillars.

As can be seen from the above, and as will be demonstrated herein, the present invention advantageously permits for the assembly of complex roof module systems in a relatively short amount of time. Accessibility of assembly workers to roof module components will be improved by shifting component installation steps to times prior to assembly of the roof panel to the vehicle. As a result, original equipment automotive manufacturers will be able to better deploy resources for building automotive vehicles. Automotive vehicle suppliers also will benefit from the ability to exert greater controls over component and assembly quality. Other advantages will be apparent from the following discussion.

### Brief Description of the Drawings

FIG. 1 is a perspective view of a roof module being assembled to a body portion of an automotive vehicle.
FIG. 2 is a sectional view of an exemplary roof portion of the roof module of FIG. 1.

### Detailed Description of the Preferred Embodiment

Generally, the present invention relates to a roof module that includes a roof portion and one or more transparent (e.g., glass) panels of which one is a windshield and any other(s) can be a backlite, side glass and the like. The transparent panels are attached to the roof portion prior to assembly of the module to a body of an automotive vehicle. In one embodiment, the only transparent panel present in the module is the windshield. In another embodiment, the roof module includes both the windshield and a backlite.

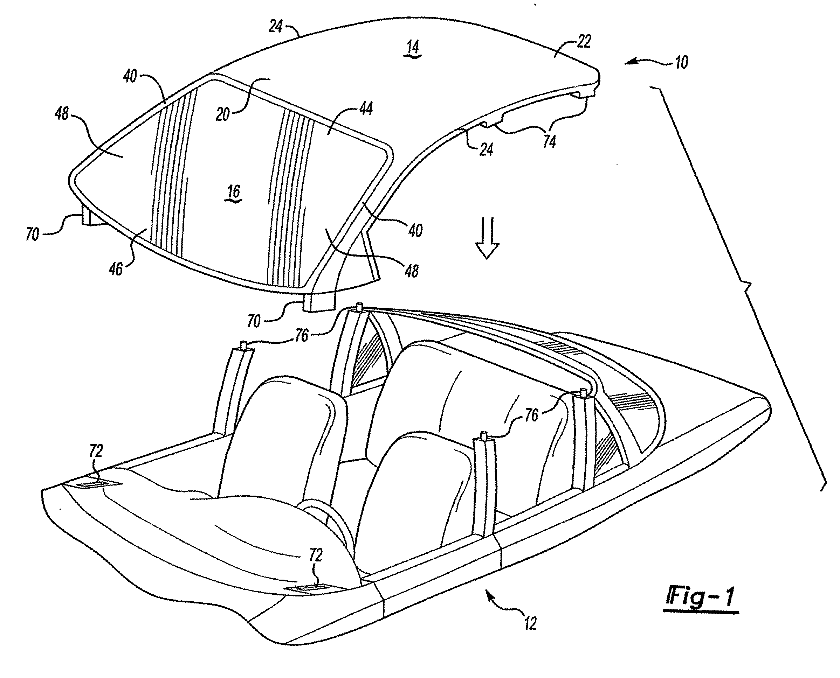

Referring to FIG. 1, there is illustrated an exemplary roof module 10 configured for assembly to a body 12 of an automotive vehicle. The module 10 generally includes a roof portion 14 attached to a transparent panel 16 wherein the roof portion 14 and the transparent panel 16 may be assembled as a single integrated unit to the body 12 of the automotive vehicle.

In FIG. 1, the roof portion 14 is generally rectangular and includes a forward edge 20 (e.g., a header), a rearward edge 22 (e.g., a rear header) and a pair of side edges 24 (e.g., side rails). Alternatively, however, the roof portion 14 may be formed in a variety of shapes and configurations depending upon the vehicle to which the roof module 10 is being attached and depending upon other considerations.

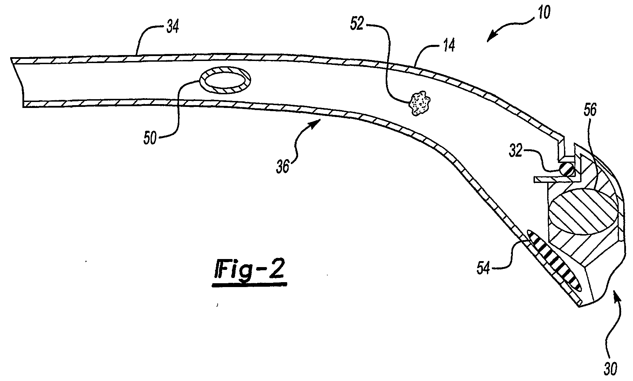

The roof portion 14 of the roof module 10 may include various core components (i.e., components that structurally define the roof module) such as a headliner, a roof panel, roof rail assemblies and the like. Referring to FIG. 2, there is illustrated a sectional view of the roof portion 14 having a roof rail assembly 30. In the embodiment shown, the roof portion 14 includes a roof panel 34 attached to the roof rail assembly 30 at least partially with a bonding system, which preferably includes an adhesive 32. The roof panel 34 generally opposes a headliner 36 forming a space therebetween. Preferably, the headliner 36 is at least partially composed of one or more foam-in-place materials, which allow various peripheral components to be installed in the roof module 10 prior to full formation of the headliner 36. The rail assembly 30 generally forms a substantially enclosed tunnel.

The roof module of the present invention includes a pair of A-pillars (10) extending outwardly away from corners (14) defined by the front edge of the roof portion. The pillars may include structural reinforcement or noise management system disposed within or upon portions of the pillars.

The roof module may also include a backlite, single or segmented glass panels for open roof systems or fixed side glass of the automotive vehicle. The transparent panel may be formed of a variety of materials such as polycarbonate/PMMA glass. The transparent panel may include a single or multiple layers (e.g., a silica layer and a polymer layer). In FIG. 1, the panel 16 is a generally rectangular windshield and includes a top edge 44, a bottom edge 46 and a pair of side edges 48. In preferred embodiments, the panel 16 may include a plastic (e.g., a PVC or RIM plastic) frame or encapsulation that may partially or fully cover some or all of the edges 44, 46, 48 of the panel.

Generally, a roof module according to the present invention may include a variety of peripheral components in addition to or integrated into the roof portion and glass panel for increasing the strength of the module, for adding to the functionality of the roof module, for protecting the vehicle from environmental conditions, for improving the aesthetic appearance of the module and the like. For example, and without limitation, the roof module may include one or more roof bows, one or more wire harnesses, electronic equipment, a global positioning system (GPS), a compass, an antennae, loud speakers, a phone, an alarm, lighting (e.g., a center high mounted stop light), a color monitor, temperature sensors, transmitters, receivers, a sun roof, a moon roof, anti-flutter and reinforcing patches, motors, seals, fluid management structure (e.g., roof ditches) baffles or the like. In one preferred embodiment, the roof module includes a sun roof package that includes aluminum extrusions, a cable driven opening and closing system driven by an electric motor and a fluid drain system.

The roof module may also include components such as seals for assisting the vehicle in fluid management (e.g. by repelling water, channeling water and the like). Additionally, the roof module may include various aesthetic features such as trim strip and the like.

In the exemplary embodiment of FIG. 2, the roof module 10 includes a wire harness 50 and a noise management system 52 disposed in the space between the headliner 36 and roof panel 34.

In preferred embodiments, vehicle impact countermeasures may be disposed in the roof module. For example, in FIG. 2, airbags 54 are disposed between the headliner 36 and roof rail assembly 30 and structural reinforcement 56 is disposed in the roof rail assembly 30. Other vehicle impact countermeasures may include structural reinforcements.

### Roof Module Assembly

Assembly of the roof module will typically include the formation of a roof panel such as the roof panel 34 of FIG. 2. The roof panel may be formed according to a variety of metal forming techniques such as hydroforming, metal stamping, roll-forming, combinations thereof or the like.

The headliner and any desired peripheral components of the roof module are preferably attached to the roof panel prior to assembly of the module to the body of the vehicle. The headliner, the peripheral components or both may be attached to the roof panel with fasteners, may be molded into place, may be adhesively secured or a combination thereof.

The windscreen and any other transparent panels can be attached to the roof portion, the pillars or both according to a variety of techniques. The panels may be attached with fasteners, they may be molded in place, they may be adhesively secured or a combination of such techniques may be used. In a preferred embodiment, the panels are at least partially attached to the roof portion with a bonding system (e.g., including a suitable adhesive, such as a urethane). Additionally, a primer may be applied to the roof portion (e.g., metal components of the roof portion), the glass panel, an encapsulation of the glass panel or a combination thereof to assist the adhesive in securing the glass panel to the roof portion. One suitable exemplary adhesive is sold under the trademark BETASEAL and is commercially available from the Dow Chemical Corporation, Midland, Michigan.

The roof panel and pillars may be painted or unpainted prior to assembly of the roof module to the body of the automotive vehicle. In one preferred embodiment, however, at least a portion of the roof panel, the pillar, the rails assemblies or a combination thereof have a class A painted finish. Even more preferably, the roof panel, the pillars and the rail assemblies have a class A painted finish that allows the roof module to be assembled to the automotive vehicle without any substantial further painting of the roof module. Advantageously, assembly of a pre-painted roof allows automotive manufacturers the opportunity to paint the body of the vehicle and assemble various portions of the vehicle interior (e.g., front and back seats and the like) to the body of the vehicle prior to assembling the roof module to the vehicle. Moreover, since one or more of the glass panels, the roof pillars or both are part of the roof module, greater space is afforded to the automotive manufacturer for assembling component of the interior of the vehicle.

In the embodiment depicted in FIG. 1, the top edge 44 of the panel 16 is connected to the roof portion 14 adjacent its forward edge 20. The side edges 48 of the panel 16 are connected to and extend with the pillars 40. The lower edge 46 is free (i.e., not connected to the body of the automotive vehicle) prior to assembly of the roof module 10 to the body of the vehicle. The panel 16 may be connected to the roof portion 14 and pillars 40 according to a variety of attachment techniques (such as fastening, welding, adhering interlocking or the like). Preferably, the panel 16 is at least partially connected to the roof portion 14, the pillars 40 or both with an adhesive and most preferably a urethane adhesive.

In highly preferred embodiments, the roof module and its attendant peripheral components are partially or fully testable prior to installation or assembly of the module to the automotive vehicle. Any electrical circuitry or electronic or electrical system equipment of the roof module may be tested according to various techniques including passing electric current to and through such circuitry and equipment. The structural integrity of the roof module may be tested by subjecting the roof module to various forces, impacts and the like.

### Automotive Vehicle Assembly

Assembly of the roof module to the automotive vehicle generally will include attaching the roof module to the body of the vehicle with fasteners such as adhesives, mating structures and the like. Prior to assembly of the module to the body of the vehicle, various transportation techniques may be instituted for transporting the roof modules to an assembly line or other location where the modules are assembled to a vehicle.

The roof modules may be supplied to any variety of locations adjacent an automotive vehicle assembly line from an on-site facility or an off-site facility. In one embodiment, the modules are supplied on racks that are suitably cushioned or otherwise configured to protect the transparent panel and any paint finish provided on the module. Preferably the racks are mobile and can be positioned as desired adjacent the automotive vehicle assembly line. It is contemplated that the roof module may be formed in one designated area of an assembly plant and transported (e.g., via racks) to another designated area of the same assembly plant for assembly of the module to the body portion of the vehicle.

Manual or automated methods may be used to move the modules to the body of the vehicle. In a preferred embodiment, the modules are provided with removable handles that may be appropriately gripped by a robot. Thereafter, the robot can bring the roof module into an opposing position over a passenger compartment of the vehicle, place the module atop the vehicle and then release the handles.

The roof module may be positioned and secured on the body of the vehicle according to a variety of protocols and techniques. The roof module and the body of the vehicle are formed with mating structures for assisting in attaching the roof module to pillars of the body. For example, and without limitation, said pillars may include protrusions that matingly fit into openings in the roof portion (e.g., the edges of the roof portion). Alternatively, the pillars may include the openings and the roof portion may include the protrusions. The A-pillars of the roof module may include protrusions that matingly fit into openings located on the body of the vehicle or the roof module may have the openings and the body the protrusions.

The mating structures assist in locating the roof module relative to the body of the vehicle during assembly and preferably assist in securing the roof module to the body of the vehicle such as by forming a snap-fit or interference fit. Adhesives and other fasteners may assist in securing the pillars to the body of the vehicle, to the roof portion or both. In a highly preferred embodiment, the mating structures self locate the roof module as a drop-in insert upon the body of the vehicle.

The roof module 10 of FIG.1 is assembled to the body of a vehicle from the front of the vehicle. The module 10 is lowered into place on the body of the vehicle such that mating structures (e.g., protrusions 70) on the A-pillars 40 of the roof module 10 matingly engage mating structures (e.g., openings 72) of the body 12 of the vehicle and mating structures (e.g., openings 74) on the edges 20,22, 26 of the roof portion 14 matingly engage mating structures (e.g., protrusions 76) on the B- pillars and C-pillars of the automotive vehicle.

In a particularly preferred embodiment, once in place, the transparent panel 16 is preferably attached to the body 12 (e.g., a metal, plastic or other structure) of the vehicle with a bonding system that includes one or more adhesives, primers or the like such, as those of commonly owned U. S. Patent Nos. 5,115,086; 5,603,798; 5,792,811; 5,922,809; 5,976,305; & 6,133,398. Thus, the adhesive, primer or both may be a one-part composition or a multi-part (e.g. 2-part) composition. They may include encapsulated ingredients. Preferably, they are a urethane adhesive, particularly one prepared from an isocyanate and a polyol, and optionally a catalyst. One or more other ingredients may be included such as a plasticizer, a filler, a reinforcement, an elastomeric component, a stabilizer or the like. The adhesive may optionally include or be prepared from a prepolymer as well.

Preferably, the bonding system is sufficient so that a relatively rapid cure is possible, e.g., less than 4 hours and more preferably less than 1 hour, and still more preferably less than 1/2 hour, so that from the time of attaching the panel 16 to the body 12, relatively little time elapses before assembling the parts into the vehicle.

The resulting bonding system preferably results in lap shear strengths of preferably 150 psi (1033 kPa) or greater as determined according to ASTM D-3163 and demonstrate impact energy strength of 9ft-lbs (12.2 Joules). Further, preferably the bonding system of the invention demonstrates a lap shear-strength after 60 minutes from application to substrates of 30 psi (206 kPa) or greater, more preferably 60 psi (412 kPa) or greater and most preferably 80 psi (548 kPa) or greater. Lap shears are determined according to ASTM D-3163. Preferably the bonding system when cured demonstrates an elongation of 300 percent or greater as determined according ASTM D-638-91 and preferably greater than 600 percent. In one preferred embodiment, the elongation is 700 percent or less.

Advantageously, the roof module may shorten the overall amount of time needed for assembly of an automotive vehicle by an automotive vehicle assembly line. For example, and without limitation, the roof portion and the windshield (e.g., the entire roof module) may be simultaneously assembled to the body of the automotive vehicle without having to separately attach one or more transparent panels before or after assembly of the roof of a vehicle to the body of the vehicle.

Also advantageous, the roof module may lessen the amount of space required for assembly of an automotive vehicle by an automotive vehicle assembly line. For example, and without limitation, packaging the roof portion and at least the windshield as a single roof module may allow the removal of equipment, racks and the like that may have previously been used to separately install the roof portion and the windshield.

As discussed herein, the windshield and any optional other transparent panels also contemplate the integration of one or more features therein, as is encountered in the automotive field. For example, the transparent panel may include or otherwise be adapted for tint, reflective or other protective coating or film, antenna wire, lights, heaters, head-up display, wipers, screens, thermochromic materials, electrochromic materials, or the like. The panels may be provided with or without an encapsulating seal. One or more seals may also be added in an earlier or later processing step.

It should be understood that the invention is not limited to the exact embodiment or construction, which has been illustrated and described but that various changes may be made without departing from the scope of the invention as defined in the following claims.

## Claims (Claims for the following Contracting State(s): AT, BE, BG, CH, CY, CZ, DK, EE, ES, FI, FR, GR, HU, IE, IT, LI, LU, MC, NL, PT, SE, SI, SK, TR)

1. A method of assembling a roof module (10) to an automotive vehicle body portion (12) having B- and C- pillars, wherein a roof module including:
a) a roof portion(14) having at least one edge (20) and a pair of opposing and spaced apart A-pillars (40) extending from adjacent opposing corners thereof, and
b) a transparent panel (16) that is a windshield having a bottom edge (46) adapted for attachment to said automotive vehicle body portion during assembly of the automotive vehicle, a top edge (44) that is adhesively secured to the roof portion adjacent the at least one edge of the roof portion, and side edges (48) secured to said A-pillars,
is assembled to the vehicle body portion (12).

2. A method as claimed in Claim 1, wherein the roof portion has mating structures (74) for engaging mating structures (76) on pillars of the automotive vehicle body portion and, during assembly of the roof module to said automotive vehicle body portion, said mating structures on the roof portion engage said mating structures on said pillars.

3. A method as claimed in Claim 1 or Claim 2, wherein the only transparent panel present in the module is the windshield.

4. A method as claimed in Claim 1 or Claim 2, wherein the roof module further comprises a second transparent panel that is a backlite having a top edge and a bottom edge wherein the top edge is secured to the roof portion adjacent a second edge (22) of the roof portion.

5. A method as claimed in Claim 5, wherein the A-pillars of the roof module have mating structures (70) that matingly fit into mating structures (72) located on the automotive vehicle body portion.

6. A method as claimed in Claim 5, wherein the mating structures assist in securing the roof module to the automotive vehicle body portion by forming a snap-fit or interference fit.

7. A method as claimed in claim 5 or claim 6, wherein the mating structures self locate the roof module as a drop-in insert upon the automotive vehicle body portion.

8. A method as claimed in any one of the preceding claims, wherein the bottom end of the transparent panel is connected to the automotive vehicle body portion using an adhesive.

9. A method as claimed in any one of the preceding claims, wherein the windshield is attached to the automotive vehicle body portion with a bonding system that includes adhesive and/or primer.

10. A method as claimed in Claim 8, wherein the adhesive has an elongation of 300 percent or greater.

11. A method as claimed in Claim 10, wherein the adhesive has an elongation of greater than 600 percent.

12. A method as claimed in any one of the preceding claims, wherein the top edge of the windshield is adhesively secured to the roof portion with a urethane adhesive.

13. A method as claimed in Claim 12, wherein a primer is utilized to assist the urethane adhesive in securing the transparent panel to the automotive vehicle body portion.

14. A method as claimed in any one of the preceding claims, wherein the roof portion includes a roof panel (34) and a foam-in-place headliner (36).

15. A method as claimed in any one of the preceding claims, wherein the roof portion includes a roof rail assembly (30).

16. A method as claimed in any one of the preceding claims, wherein the roof portion includes at least one peripheral component selected from a wire harness (50), a global positioning system, a temperature sensor, a speaker, a monitor, a sunroof package, a moonroof package and a light.

17. A method as claimed in any one of the preceding claims , wherein at least one of the transparent panels includes an encapsulation covering at least a portion of one of the edges of the transparent panel.

18. A method as claimed in any one of the preceding claims , wherein the roof portion includes at least one vehicle impact countermeasure selected from an air bag (54) and a structural reinforcement. (56)

19. A method as claimed in any one of the preceding claims , wherein the roof portion includes a roof rail assembly having structural foam disposed therein.

20. A method as claimed in any one of the preceding claims, wherein the roof module is assembled in a first designated area of an assembly plant and the roof module is assembled to the body portion in a second designated area of the assembly plant.

21. A roof module (10) for assembling by a method of Claim 1 to an automotive vehicle body portion (12) having B- and C- pillars, said roof module comprising:
a) a roof portion having at least one edge (20) and a pair of opposing and spaced apart A-pillars (40) extending from adjacent opposing corners thereof; and
b) a transparent panel (16) that is a windshield having a bottom edge (46) adapted for attachment to said automotive vehicle body portion during assembly of the automotive vehicle, a top edge (44) that is adhesively secured to the roof portion adjacent the at least one edge of the roof portion, and side edges (48) secured to said A-pillars.

22. A roof module as claimed in Claim 21, wherein the roof portion has mating structures (74) for engaging mating structures (76) on piiiars of the automotive vehicle body portion.

23. A roof module as claimed in Claim 21 or Claim 22, wherein the only transparent panel present in the module is the windshield.

24. A roof module as claimed in Claim 21 or Claim 22, wherein the roof module further comprises a second transparent panel that is a backlite having a top edge and a bottom edge wherein the top edge is secured to the roof portion adjacent a second edge (22) of the roof portion.

25. A roof module as claimed in any one of Claims 21 to 24, wherein the A-pillars of the roof module have mating structures (70) that matingly fit into mating structures (72) located on the automotive vehicle body portion.

26. A roof module as claimed in any one of Claims 21 to 25, wherein the mating structures assist in securing the roof module to the automotive vehicle body portion by forming a snap-fit or interference fit.

27. A roof module as claimed in any one of Claims 21 to 26, wherein the mating structures self locate the roof module as a drop-in insert upon the automotive vehicle body portion.

## Claims (Claims for the following Contracting State(s): DE, GB)

1. A method of assembling a roof module (10) to an automotive vehicle body portion (12) having B- and C- pillars, wherein a roof module including:
a) a roof portion(14) having at least one edge (20), a pair of opposing and spaced apart A-pillars (40) extending from adjacent opposing corners thereof, and mating structures (74) for engaging mating structures (76) on said body pillars; and
b) a transparent panel (16) that is a windshield having a bottom edge (46) adapted for attachment to said automotive vehicle body portion during assembly of the automotive vehicle, a top edge (44) that is adhesively secured to the roof portion adjacent the at least one edge of the roof portion, and side edges (48) secured to said A-pillars,
is assembled to the vehicle body portion (12) whereby, during assembly of the roof module to said automotive vehicle body portion, said mating structures on the roof portion engage said mating structures on said body pillars.

2. A method as claimed in Claim 1, wherein the only transparent panel present in the module is the windshield.

3. A method as claimed in Claim 1, wherein the roof module further comprises a second transparent panel that is a backlite having a top edge and a bottom edge wherein the top edge is secured to the roof portion adjacent a second edge (22) of the roof portion.

4. A method as claimed in any one of the preceding claims, wherein the A-pillars of the roof module have mating structures (70) that matingly fit into mating structures (72) located on the automotive vehicle body portion.

5. A method as claimed in any one of the preceding claims, wherein the mating structures assist in securing the roof module to the automotive vehicle body portion by forming a snap-fit or interference fit.

6. A method as claimed in any one of the preceding claims, wherein the mating structures self locate the roof module as a drop-in insert upon the automotive vehicle body portion.

7. A method as claimed in any one of the preceding claims, wherein the bottom end of the transparent panel is connected to the automotive vehicle body portion using an adhesive.

8. A method as claimed in any one of the preceding claims, wherein the windshield is attached to the automotive vehicle body portion with a bonding system that includes adhesive and/or primer.

9. A method as claimed in Claims 7, wherein the adhesive has an elongation of 300 percent or greater.

10. A method as claimed in Claim 8, wherein the adhesive has an elongation of greater than 600 percent.

11. A method as claimed in any one of the preceding claims, wherein the top edge of the windshield is adhesively secured to the roof portion with a urethane adhesive.

12. A method as claimed in Claim 11, wherein a primer is utilized to assist the urethane adhesive in securing the transparent panel to the automotive vehicle body portion.

13. A method as claimed in any one of the preceding claims 1, wherein the roof portion includes a roof panel (34) and a foam-in-place headliner (36).

14. A method as claimed in any one of the preceding claims, wherein the roof portion includes a roof rail assembly (30).

15. A method as claimed in any one of the preceding claims , wherein the roof portion includes at least one peripheral component selected from a wire harness (50), a global positioning system, a temperature sensor, a speaker, a monitor, a sunroof package, a moonroof package and a light.

16. A method as claimed in any one of the preceding claims , wherein at least one of the transparent panels includes an encapsulation covering at least a portion of one of the edges of the transparent panel.

17. A method as claimed in any one of the preceding claims , wherein the roof portion includes at least one vehicle impact countermeasure selected from an air bag (54) and a structural reinforcement. (56)

18. A method as claimed in any one of the preceding claims, wherein the roof portion includes a roof rail assembly having structural foam disposed therein.

19. A method as claimed in any one of the preceding claims, wherein the roof module is assembled in a first designated area of an assembly plant and the roof module is assembled to the body portion in a second designated area of the assembly plant.

20. A roof module (10) for assembling by a method of Claim 1 to an automotive vehicle body portion (12) having B- and C- pillars, said roof module comprising:
a) a roof portion having at least one edge (20), a pair of opposing and spaced apart A-pillars (40) extending from adjacent opposing corners thereof and mating structures (74) for engaging mating structures (76) on said body pillars; and
b) a transparent panel (16) that is a windshield having a bottom edge (46) adapted for attachment to said automotive vehicle body portion during assembly of the automotive vehicle, a top edge (44) that is adhesively secured to the roof portion adjacent the at least one edge of the roof portion, and side edges (48) secured to said A-pillars.

21. A roof module as claimed in Claim 20, wherein the only transparent panel present in the module is the windshield.

22. A roof module as claimed in Claim 21, wherein the roof module further comprises a second transparent panel that is a backlite having a top edge and a bottom edge wherein the top edge is secured to the roof portion adjacent a second edge (22) of the roof portion.

23. A roof module as claimed in any one of Claims 20 to 22, wherein the A-pillars of the roof module have mating structures (70) that matingly fit into mating structures (72) located on the automotive vehicle body portion.

24. A roof module as claimed in any one of Claims 20 to 23, wherein the mating structures assist in securing the roof module to the automotive vehicle body portion by forming a snap-fit or interference fit.

25. A roof module as claimed in any one of Claims 20 to 24, wherein the mating structures self locate the roof module as a drop-in insert upon the automotive vehicle body portion.

## Patentansprüche (Patentansprüche für folgende(n) Vertragsstaat(en): AT, BE, BG, CHI, CY, CZ, DK, EE, ES, FI, FR, GR, HU, IE, IT, LI, LU, MC, NL, PT, SE, SI, SK, TR)

1. Verfahren zur Montage eines Dachmoduls (10) an einem Kraftfahrzeugskörperbereich (12), der B- und C-Säulen aufweist, bei dem das Dachmodul (10), welches enthält:
a) einen Dachbereich (14) mit wenigstens einem Rand (20) und einem Paar von gegenüberliegenden und beabstandeten A-Säulen (40), die sich von benachbarten entgegengesetzten Ecken von ihm erstrecken, und
b) eine durchsichtige Scheibe (16), die eine Windschutzscheibe ist, welche einen unteren Rand (46), der zur Befestigung an dem Kraftfahrzeugskörperbereich während der Montage des Kraftfahrzeugs geeignet ist, einen oberen Rand (44), der klebend an den Dachbereich nahe dem wenigstens einen Rand des Dachbereichs gesichert ist, und Seitenränder (48) aufweist, die an den A-Säulen gesichert sind,
an dem Fahrzeugkörperbereich (12) montiert wird.

2. Verfahren nach Anspruch 1, wobei der Dachbereich passende Strukturen (74) zum Koppeln an passende Strukturen (76) auf Säulen des Kraftfahrzeugskörperbereich aufweist, und die passenden Strukturen des Dachbereichs während der Montage des Dachmoduls an dem Kraftfahrzeugskörperbereich mit den passenden Strukturen an den Säulen koppeln.

3. Verfahren nach Anspruch 1 oder 2, wobei die einzige in dem Modul vorhandene durchsichtige Scheibe die Windschutzscheibe ist.

4. Verfahren nach Anspruch 1 oder 2, wobei das Dachmodul weiter eine zweite durchsichtige Scheibe aufweist, die eine hintere Scheibe mit einem oberen Rand und einem unteren Rand ist, wobei der obere Rand an den Dachbereich nahe einem zweiten Rand (22) des Dachbereichs gesichert ist.

5. Verfahren nach einem der vorhergehenden Ansprüche, wobei die A-Säulen des Dachmoduls passende Strukturen (70) aufweisen, die passend in an dem Kraftfahrzeugskörperbereich angeordnete passende Strukturen (72) eingepaßt werden.

6. Verfahren nach Anspruch 5, wobei die passenden Strukturen zur Sicherung des Dachmoduls an dem Kraftfahrzeugskörperbereich beitragen, indem sie einen Schnappverschluß oder einen Preßsitz bilden.

7. Verfahren nach Anspruch 5 oder 6, wobei die passenden Strukturen für eine Selbstpositionierung des Dachmoduls sorgen, wie eine Absenkeinfügung auf den Kraftfahrzeugskörperbereich.

8. Verfahren nach einem der vorhergehenden Ansprüche, wobei das untere Ende der durchsichtigen Scheibe mittels eines Klebstoffs mit dem Kraftfahrzeugskörperbereich verbunden wird.

9. Verfahren nach einem der vorhergehenden Ansprüche, bei dem die Windschutzscheibe an dem Kraftfahrzeugskörperbereich mit einem Bindesystem angebracht wird, welches Klebstoff und/oder Spachtelmasse enthält.

10. Verfahren nach Anspruch 8, bei dem der Klebstoff eine elastische Dehnung von 300 % oder mehr aufweist.

11. Verfahren nach Anspruch 10, wobei der Klebstoff eine elastische Dehnung von 600 % oder mehr aufweist.

12. Verfahren nach einem der vorhergehenden Ansprüche, wobei der obere Rand der Windschutzscheibe mit einem Urethanklebstoff klebend an dem Dachbereich gesichert ist.

13. Verfahren nach Anspruch 12, bei dem eine Spachtelmasse benutzt wird, die den Urethanklebstoff bei der Sicherung der durchsichtigen Scheibe an dem Kraftfahrzeugskörperbereich unterstützt.

14. Verfahren nach einem der vorhergehenden Ansprüche, bei dem der Dachbereich eine Dachplatte (34) und eine ausgeschäumte Dachinnenverkleidung (36) enthält.

15. Verfahren nach einem der vorhergehenden Ansprüche, bei dem der Dachbereich eine Dachrahmenanordnung (30) enthält.

16. Verfahren nach einem der vorhergehenden Ansprüche, bei dem der Dachbereich wenigstens eine Zusatzkomponente, ausgewählt aus einem Kabelbaum (50), einem globalen Positionssystem, einem Temperatursensor, einem Lautsprecher, einem Monitor, einer Schiebe/-Hebedacheinrichtung, einem durchsichtigen Bereich und einem Licht, aufweist.

17. Verfahren nach einem der vorhergehenden Ansprüche, wobei wenigstens eine der durchsichtigen Scheiben eine Einkapselung aufweist, welche wenigstens einen Bereich von einem der Ränder der durchsichtigen Scheibe abdeckt.

18. Verfahren nach einem der vorhergehenden Ansprüche, bei dem der Dachbereich wenigstens eine Gegenmaßnahme für einen Fahrzeugzusammenstoß, ausgewählt aus einem Airbag (54) und einer strukturellen Verstärkung (56), aufweist.

19. Verfahren nach einem der vorhergehenden Ansprüche, bei dem der Dachbereich eine Dachrahmenanordnung mit einem darin vorhandenen Strukturschaum aufweist.

20. Verfahren nach einem der vorhergehenden Ansprüche, bei dem das Dachmodul in einem ersten bestimmten Bereich eines Montagewerks montiert wird, und das Dachmodul in einem zweiten bestimmten Bereich des Montagewerks an dem Körperbereich montiert wird.

21. Dachmodul (10) zur Montage gemäß einem Verfahren nach Anspruch 1 an einem Kraftfahrzeugskörperbereich (12), der B- und C-Säulen aufweist, wobei das Dachmodul (10) aufweist:
a) einen Dachbereich (14) mit wenigstens einem Rand (20) und einem Paar von gegenüberliegenden und beabstandeten A-Säulen (40), die sich von benachbarten entgegengesetzten Ecken von ihm erstrecken, und
b) eine durchsichtige Scheibe (16), die eine Windschutzscheibe ist, welche einen unteren Rand (46), der zur Befestigung an dem Kraftfahrzeugskörperbereich während der Montage des Kraftfahrzeugs geeignet ist, einen oberen Rand (44), der klebend an den Dachbereich nahe dem wenigstens einen Rand des Dachbereichs gesichert ist, und Seitenränder (48) aufweist, die an den A-Säulen gesichert sind.

22. Dachmodul nach Anspruch 21, wobei der Dachbereich passende Strukturen (74) zum Koppeln an passende Strukturen (76) auf Säulen des Kraftfahrzeugskörperbereich aufweist.

23. Dachmodul nach Anspruch 21 oder 22, wobei die einzige in dem Modul vorhandene durchsichtige Scheibe die Windschutzscheibe ist.

24. Dachmodul nach Anspruch 21 oder 22, wobei das Dachmodul weiter eine zweite durchsichtige Scheibe aufweist, die eine hintere Scheibe mit einem oberen Rand und einem unteren Rand ist, wobei der obere Rand an den Dachbereich nahe einem zweiten Rand (22) des Dachbereichs gesichert ist.

25. Dachmodul nach einem der Ansprüche 21 bis 24, wobei die A-Säulen des Dachmoduls passende Strukturen (70) aufweisen, die passend in an dem Kraftfahrzeugskörperbereich angeordnete passende Strukturen (72) einpaßbar sind.

26. Dachmodul nach einem der Ansprüche 21 bis 25, wobei die passenden Strukturen zur Sicherung des Dachmoduls an dem Kraftfahrzeugskörperbereich beitragen, indem sie einen Schnappverschluß oder einen Preßsitz bilden.

27. Dachmodul nach einem der Ansprüche 21 bis 26, wobei die passenden Strukturen für eine Selbstpositionierung des Dachmoduls sorgen, wie eine Absenkeinfügung auf den Kraftfahrzeugskörperbereich.

## Patentansprüche (Patentansprüche für folgende(n) Vertragsstaat(en): DE, GB)

1. Verfahren zur Montage eines Dachmoduls (10) an einem Kraftfahrzeugskörperbereich (12), der B- und C-Säulen aufweist, bei dem das Dachmodul (10), welches enthält:
a) einen Dachbereich (14) mit wenigstens einem Rand (20) und einem Paar von gegenüberliegenden und beabstandeten A-Säulen (40), die sich von benachbarten entgegengesetzten Ecken von ihm erstrecken, und passenden Strukturen (74) zum Koppeln an passende Strukturen (76) auf diesen Säulen des Bereichs; und
b) eine durchsichtige Scheibe (16), die eine Windschutzscheibe ist, welche einen unteren Rand (46), der zur Befestigung an dem Kraftfahrzeugskörperbereich während der Montage des Kraftfahrzeugs geeignet ist, einen oberen Rand (44), der klebend an den Dachbereich nahe dem wenigstens einen Rand des Dachbereichs gesichert ist, und Seitenränder (48) aufweist, die an den A-Säulen gesichert sind,
an dem Fahrzeugkörperbereich (12) montiert wird, wodurch die passenden Strukturen des Dachbereichs während der Montage des Dachmoduls an dem Kraftfahrzeugskörperbereich mit den passenden Strukturen an den Säulen koppeln.

2. Verfahren nach Anspruch 1, wobei die einzige in dem Modul vorhandene durchsichtige Scheibe die Windschutzscheibe ist.

3. Verfahren nach Anspruch 1, wobei das Dachmodul weiter eine zweite durchsichtige Scheibe aufweist, die eine hintere Scheibe mit einem oberen Rand und einem unteren Rand ist, wobei der obere Rand an den Dachbereich nahe einem zweiten Rand (22) des Dachbereichs gesichert ist.

4. Verfahren nach einem der vorhergehenden Ansprüche, wobei die A-Säulen des Dachmoduls passende Strukturen (70) aufweisen, die passend in an dem Kraftfahrzeugskörperbereich angeordnete passende Strukturen (72) eingepaßt werden.

5. Verfahren nach einem der vorhergehenden Ansprüche, wobei die passenden Strukturen zur Sicherung des Dachmoduls an dem Kraftfahrzeugskörperbereich beitragen, indem sie einen Schnappverschluß oder einen Preßsitz bilden.

6. Verfahren nach einem der vorhergehenden Ansprüche, wobei die passenden Strukturen für eine Selbstpositionierung des Dachmoduls sorgen, wie eine Absenkeinfügung auf den Kraftfahrzeugskörperbereich.

7. Verfahren nach einem der vorhergehenden Ansprüche, wobei das untere Ende der durchsichtigen Scheibe mittels eines Klebstoffs mit dem Kraftfahrzeugskörperbereich verbunden wird.

8. Verfahren nach einem der vorhergehenden Ansprüche, bei dem die Windschutzscheibe an dem Kraftfahrzeugskörperbereich mit einem Bindesystem angebracht wird, welches Klebstoff und/oder Spachtelmasse enthält.

9. Verfahren nach Anspruch 7, bei dem der Klebstoff eine elastische Dehnung von 300 % oder mehr aufweist.

10. Verfahren nach Anspruch 8, wobei der Klebstoff eine elastische Dehnung von 600 % oder mehr aufweist.

11. Verfahren nach einem der vorhergehenden Ansprüche, wobei der obere Rand der Windschutzscheibe mit einem Urethanklebstoff klebend an dem Dachbereich gesichert ist.

12. Verfahren nach Anspruch 11, bei dem eine Spachtelmasse benutzt wird, die den Urethanklebstoff bei der Sicherung der durchsichtigen Scheibe an dem Kraftfahrzeugskörperbereich unterstützt.

13. Verfahren nach einem der vorhergehenden Ansprüche, bei dem der Dachbereich eine Dachplatte (34) und eine ausgeschäumte Dachinnenverkleidung (36) enthält.

14. Verfahren nach einem der vorhergehenden Ansprüche, bei dem der Dachbereich eine Dachrahmenanordnung (30) enthält.

15. Verfahren nach einem der vorhergehenden Ansprüche, bei dem der Dachbereich wenigstens eine Zusatzkomponente, ausgewählt aus einem Kabelbaum (50), einem globalen Positionssystem, einem Temperatursensor, einem Lautsprecher, einem Monitor, einer Schiebe/-Hebedacheinrichtung, einem durchsichtigen Bereich und einem Licht; aufweist.

16. Verfahren nach einem der vorhergehenden Ansprüche, wobei wenigstens eine der durchsichtigen Scheiben eine Einkapselung aufweist, welche wenigstens einen Bereich von einem der Ränder der durchsichtigen Scheibe abdeckt.

17. Verfahren nach einem der vorhergehenden Ansprüche, bei dem der Dachbereich wenigstens eine Gegenmaßnahme für einen Fahrzeugzusammenstoß, ausgewählt aus einem Airbag (54) und einer strukturellen Verstärkung (56), aufweist.

18. Verfahren nach einem der vorhergehenden Ansprüche, bei dem der Dachbereich eine Dachrahmenanordnung mit einem darin vorhandenen Strukturschaum aufweist.

19. Verfahren nach einem der vorhergehenden Ansprüche, bei dem das Dachmodul in einem ersten bestimmten Bereich eines Montagewerks montiert wird, und das Dachmodul in einem zweiten bestimmten Bereich des Montagewerks an dem Körperbereich montiert wird.

20. Dachmodul (10) zur Montage gemäß einem Verfahren nach Anspruch 1 an einem Kraftfahrzeugskörperbereich (12), der B- und C-Säulen aufweist, wobei das Dachmodul (10) aufweist:
a) einen Dachbereich (14) mit wenigstens einem Rand (20) und einem Paar von gegenüberliegenden und beabstandeten A-Säulen (40), die sich von benachbarten entgegengesetzten Ecken von ihm erstrecken, und passenden Strukturen (74) zum Koppeln an passende Strukturen (76) auf diesen Säulen des Bereichs; und
b) eine durchsichtige Scheibe (16), die eine Windschutzscheibe ist, welche einen unteren Rand (46), der zur Befestigung an dem Kraftfahrzeugskörperbereich während der Montage des Kraftfahrzeugs geeignet ist, einen oberen Rand (44), der klebend an den Dachbereich nahe dem wenigstens einen Rand des Dachbereichs gesichert ist, und Seitenränder (48) aufweist, die an den A-Säulen gesichert sind.

21. Dachmodul nach Anspruch 20, wobei die einzige in dem Modul vorhandene durchsichtige Scheibe die Windschutzscheibe ist.

22. Dachmodul nach Anspruch 20, wobei das Dachmodul weiter eine zweite durchsichtige Scheibe aufweist, die eine hintere Scheibe mit einem oberen Rand und einem unteren Rand ist, wobei der obere Rand an den Dachbereich nahe einem zweiten Rand (22) des Dachbereichs gesichert ist.

23. Dachmodul nach einem der Ansprüche 20 bis 22, wobei die A-Säulen des Dachmoduls passende Strukturen (70) aufweisen, die passend in an dem Kraftfahrzeugskörperbereich angeordnete passende Strukturen (72) einpaßbar sind.

24. Dachmodul nach einem der Ansprüche 20 bis 23, wobei die passenden Strukturen zur Sicherung des Dachmoduls an dem Kraftfahrzeugskörperbereich beitragen, indem sie einen Schnappverschluß oder einen Preßsitz bilden.

25. Dachmodul nach einem der Ansprüche 20 bis 24, wobei die passenden Strukturen für eine Selbstpositionierung des Dachmoduls sorgen, wie eine Absenkeinfügung auf den Kraftfahrzeugskörperbereich.

## Revendications (Revendications pour l'(les) Etat(s) contractant(s) suivant(s): AT, BE, BG, CHI, CY, CZ, DK, EE, ES, FI, FR, GR, HU, IE, IT, LI, LU, MC, NL, PT, SE, SI, SK, TR)

1. Procédé d'assemblage d'un module de toit (10) sur la partie carrosserie (12) d'un véhicule automobile comportant des montants B et C, dans lequel un module de toit comprenant :
a) une partie toit (14) comportant au moins un bord (20) et une paire de montants A opposés et espacés (40) s'étendant depuis ses coins opposés voisins, et
b) un panneau transparent (16) qui est un pare-brise ayant un bord inférieur (46) conçu pour être fixé à ladite partie carrosserie de véhicule automobile lors de l'assemblage du véhicule automobile, un bord supérieur (44) qui est fixé de manière adhésive à la partie toit au voisinage dudit au moins un bord de la partie toit, et des bords latéraux (48) fixés auxdits montants A,
est assemblé à la partie carrosserie (12) du véhicule.

2. Procédé selon la revendication 1, dans lequel la partie toit a des structures d'accouplement (74) destinées à se mettre en prise avec des structures d'accouplement (76) prévues sur les montants de la partie carrosserie du véhicule automobile et, pendant l'assemblage du module de toit sur ladite partie carrosserie du véhicule automobile, lesdites structures d'accouplement de la partie toit se mettent en prise avec lesdites structures d'accouplement desdits montants.

3. Procédé selon la revendication 1 ou 2, dans lequel le seul panneau transparent présent dans le module est le pare-brise.

4. Procédé selon la revendication 1 ou 2, dans lequel le module de toit comprend en outre un deuxième panneau transparent qui est une lunette ayant un bord supérieur et un bord inférieur, le bord supérieur étant fixé à la partie toit au voisinage d'un deuxième bord (22) de la partie toit.

5. Procédé selon l'une quelconque des revendications précédentes, dans lequel les montants A du module de toit ont des structures d'accouplement (70) qui se montent dans des structures d'accouplement (72) situées sur la partie carrosserie du véhicule automobile.

6. Procédé selon la revendication 5, dans lequel les structures d'accouplement participent à la fixation du module de toit sur la partie carrosserie du véhicule automobile en formant un assemblage par pression ou un ajustement avec serrage.

7. Procédé selon la revendication 5 ou 6, dans lequel les structures d'accouplement positionnent le module de toit en tant qu'insert de caisse sur la partie carrosserie du véhicule automobile.

8. Procédé selon l'une quelconque des revendications précédentes, dans lequel l'extrémité inférieure du panneau transparent est connectée à la partie carrosserie du véhicule automobile en utilisant un adhésif.

9. Procédé selon l'une quelconque des revendications précédentes, dans lequel le pare-brise est fixé à la partie carrosserie du véhicule automobile au moyen d'un système de liaison qui inclut un adhésif et/ou une couche primaire.

10. Procédé selon la revendication 8, dans lequel l'adhésif a un allongement de 300 pour cent ou davantage.

11. Procédé selon la revendication 10, dans lequel l'adhésif a un allongement supérieur à 600 pour cent.

12. Procédé selon l'une quelconque des revendications précédentes, dans lequel le bord supérieur du pare-brise est fixé de manière adhésive à la partie toit au moyen d'un adhésif à base d'uréthane.

13. Procédé selon la revendication 12, dans lequel une couche primaire est utilisée pour aider l'adhésif à base d'uréthane à fixer le panneau transparent à la partie carrosserie de véhicule automobile.

14. Procédé selon l'une quelconque des revendications précédentes, dans lequel la partie toit comprend un panneau de toit (34) et une garniture de toit à moussage in situ (36).

15. Procédé selon l'une quelconque des revendications précédentes, dans lequel la partie toit comprend un ensemble de longerons de toit (30).

16. Procédé selon l'une quelconque des revendications précédentes, dans lequel la partie toit comprend au moins un composant périphérique choisi parmi un faisceau électrique (50), un système GPS, un capteur de température, un haut-parleur, un moniteur, un système de toit ouvrant et une lumière.

17. Procédé selon l'une quelconque des revendications précédentes, dans lequel au moins l'un des panneaux transparents comporte un enrobage qui couvre au moins une partie de l'un des bords du panneau transparent.

18. Procédé selon l'une quelconque des revendications précédentes, dans lequel la partie toit comporte au moins une contre-mesure de choc de véhicule choisie parmi un coussin de sécurité gonflable (54) et un renforcement structurel (56).

19. Procédé selon l'une quelconque des revendications précédentes, dans lequel la partie toit comporte un ensemble de longerons de toit dans lequel est disposée de la mousse structurelle.

20. Procédé selon l'une quelconque des revendications précédentes, dans lequel le module de toit est assemblé dans une première zone désignée d'une usine de montage et le module de toit est monté sur la partie carrosserie dans une deuxième zone désignée de l'usine de montage.

21. Module de toit (10) destiné à être monté, au moyen d'un procédé conforme à la revendication 1, sur la partie carrosserie (12) d'un véhicule automobile comportant des montants B et C, ledit module de toit comprenant :
a) une partie toit comportant au moins un bord (20) et une paire de montants A opposés et espacés (40) s'étendant depuis ses coins opposés voisins ; et
b) un panneau transparent (16) qui est un pare-brise ayant un bord inférieur (46) conçu pour être fixé à ladite partie carrosserie de véhicule automobile lors de l'assemblage du véhicule automobile, un bord supérieur (44) qui est fixé de manière adhésive à la partie toit au voisinage dudit au moins un bord de la partie toit, et des bords latéraux (48) fixés auxdits montants A.

22. Module de toit selon la revendication 21, dans lequel la partie toit a des structures d'accouplement (74) destinées à se mettre en prise avec des structures d'accouplement (76) prévues sur les montants de la partie carrosserie du véhicule automobile.

23. Module de toit selon la revendication 21 ou 22, dans lequel le seul panneau transparent présent dans le module est le pare-brise.

24. Module de toit selon la revendication 21 ou 22, dans lequel le module de toit comprend en outre un deuxième panneau transparent qui est une lunette ayant un bord supérieur et un bord inférieur, le bord supérieur étant fixé à la partie toit au voisinage d'un deuxième bord (22) de la partie toit.

25. Module de toit selon l'une quelconque des revendications 21 à 24, dans lequel les montants A du module de toit ont des structures d'accouplement (70) qui se montent dans des structures d'accouplement (72) situées sur la partie carrosserie du véhicule automobile.

26. Module de toit selon l'une quelconque des revendications 21 à 25, dans lequel les structures d'accouplement participent à la fixation du module de toit sur la partie carrosserie du véhicule automobile en formant un assemblage par pression ou un ajustement avec serrage.

27. Module de toit selon l'une quelconque des revendications 21 à 26, dans lequel les structures d'accouplement positionnent le module de toit en tant qu'insert de caisse sur la partie carrosserie du véhicule automobile.

## Revendications (Revendications pour l'(les) Etat(s) contractant(s) suivant(s): DE, GB)

1. Procédé d'assemblage d'un module de toit (10) sur la partie carrosserie (12) d'un véhicule automobile comportant des montants B et C, dans lequel un module de toit comprenant :
a) une partie toit (14) comportant au moins un bord (20), une paire de montants A opposés et espacés (40) s'étendant depuis ses coins opposés voisins, et des structures d'accouplement (74) destinées à se mettre en prise avec des structures d'accouplement (76) prévues sur lesdits montants de carrosserie ; et
b) un panneau transparent (16) qui est un pare-brise ayant un bord inférieur (46) conçu pour être fixé à ladite partie carrosserie de véhicule automobile lors de l'assemblage du véhicule automobile, un bord supérieur (44) qui est fixé de manière adhésive à la partie toit au voisinage dudit au moins un bord de la partie toit, et des bords latéraux (48) fixés auxdits montants A,
est assemblé à la partie carrosserie (12) du véhicule, et dans lequel, pendant l'assemblage du module de toit sur ladite partie carrosserie du véhicule automobile, lesdites structures d'accouplement de la partie toit se mettent en prise avec lesdites structures d'accouplement desdits montants de carrosserie.

2. Procédé selon la revendication 1, dans lequel le seul panneau transparent présent dans le module est le pare-brise.

3. Procédé selon la revendication 1, dans lequel le module de toit comprend en outre un deuxième panneau transparent qui est une lunette ayant un bord supérieur et un bord inférieur, le bord supérieur étant fixé à la partie toit au voisinage d'un deuxième bord (22) de la partie toit.

4. Procédé selon l'une quelconque des revendications précédentes, dans lequel les montants A du module de toit ont des structures d'accouplement (70) qui se montent dans des structures d'accouplement (72) situées sur la partie carrosserie du véhicule automobile.

5. Procédé selon l'une quelconque des revendications précédentes, dans lequel les structures d'accouplement participent à la fixation du module de toit sur la partie carrosserie du véhicule automobile en formant un assemblage par pression ou un ajustement avec serrage.

6. Procédé selon l'une quelconque des revendications précédentes, dans lequel les structures d'accouplement positionnent le module de toit en tant qu'insert de caisse sur la partie carrosserie du véhicule automobile.

7. Procédé selon l'une quelconque des revendications précédentes, dans lequel l'extrémité inférieure du panneau transparent est connectée à la partie carrosserie du véhicule automobile en utilisant un adhésif.

8. Procédé selon l'une quelconque des revendications précédentes, dans lequel le pare-brise est fixé à la partie carrosserie du véhicule automobile au moyen d'un système de liaison qui inclut un adhésif et/ou une couche primaire.

9. Procédé selon la revendication 7, dans lequel l'adhésif a un allongement de 300 pour cent ou davantage.

10. Procédé selon la revendication 8, dans lequel l'adhésif a un allongement supérieur à 600 pour cent.

11. Procédé selon l'une quelconque des revendications précédentes, dans lequel le bord supérieur du pare-brise est fixé de manière adhésive à la partie toit au moyen d'un adhésif à base d'uréthane.

12. Procédé selon la revendication 11, dans lequel une couche primaire est utilisée pour aider l'adhésif à base d'uréthane à fixer le panneau transparent à la partie carrosserie de véhicule automobile.

13. Procédé selon l'une quelconque des revendications précédentes, dans lequel la partie toit comprend un panneau de toit (34) et une garniture de toit à moussage in situ (36).

14. Procédé selon l'une quelconque des revendications précédentes, dans lequel la partie toit comprend un ensemble de longerons de toit (30).

15. Procédé selon l'une quelconque des revendications précédentes, dans lequel la partie toit comprend au moins un composant périphérique choisi parmi un faisceau électrique (50), un système GPS, un capteur de température, un haut-parleur, un moniteur, un système de toit ouvrant et une lumière.

16. Procédé selon l'une quelconque des revendications précédentes, dans lequel au moins l'un des panneaux transparents comporte un enrobage qui couvre au moins une partie de l'un des bords du panneau transparent.

17. Procédé selon l'une quelconque des revendications précédentes, dans lequel la partie toit comporte au moins une contre-mesure de choc de véhicule choisie parmi un coussin de sécurité gonflable (54) et un renforcement structurel (56).

18. Procédé selon l'une quelconque des revendications précédentes, dans lequel la partie toit comporte un ensemble de longerons de toit dans lequel est disposée de la mousse structurelle.

19. Procédé selon l'une quelconque des revendications précédentes, dans lequel le module de toit est assemblé dans une première zone désignée d'une usine de montage et le module de toit est monté sur la partie carrosserie dans une deuxième zone désignée de l'usine de montage.

20. Module de toit (10) destiné à être monté, au moyen d'un procédé conforme à la revendication 1, sur la partie carrosserie (12) d'un véhicule automobile comportant des montants B et C, ledit module de toit comprenant :
a) une partie toit comportant au moins un bord (20) et une paire de montants A opposés et espacés (40) s'étendant depuis ses coins opposés voisins et des structures d'accouplement (74) destinées à se mettre en prise avec des structures d'accouplement (76) prévues sur lesdits montants de carrosserie ; et
b) un panneau transparent (16) qui est un pare-brise ayant un bord inférieur (46) conçu pour être fixé à ladite partie carrosserie de véhicule automobile lors de l'assemblage du véhicule automobile, un bord supérieur (44) qui est fixé de manière adhésive à la partie toit au voisinage dudit au moins un bord de la partie toit, et des bords latéraux (48) fixés auxdits montants A.

21. Module de toit selon la revendication 20, dans lequel le seul panneau transparent présent dans le module est le pare-brise.

22. Module de toit selon la revendication 21, dans lequel le module de toit comprend en outre un deuxième panneau transparent qui est une lunette ayant un bord supérieur et un bord inférieur, le bord supérieur étant fixé à la partie toit au voisinage d'un deuxième bord (22) de la partie toit.

23. Module de toit selon l'une quelconque des revendications 20 à 22, dans lequel les montants A du module de toit ont des structures d'accouplement (70) qui se montent dans des structures d'accouplement (72) situées sur la partie carrosserie du véhicule automobile.

24. Module de toit selon l'une quelconque des revendications 20 à 23, dans lequel les structures d'accouplement participent à la fixation du module de toit sur la partie carrosserie du véhicule automobile en formant un assemblage par pression ou un ajustement avec serrage.

25. Module de toit selon l'une quelconque des revendications 20 à 24, dans lequel les structures d'accouplement positionnent le module de toit en tant qu'insert de caisse sur la partie carrosserie du véhicule automobile.
